# EUROPEAN PATENT SPECIFICATION

(11) **EP 3 071 809 B1**
(45) Date of publication and mention of the grant of the patent: **01.03.2017**
(21) Application number: 14806687.1
(22) Date of filing: 12.11.2014
(51) Int. Cl.: F01N 13/00, F02B 37/013

(54) **ARRANGEMENT FOR TREATING EXHAUST GAS IN A TURBOCHARGED INTERNAL COMBUSTION ENGINE AND METHOD OF OPERATING A TURBOCHARGED INTERNAL COMBUSTION ENGINE**
ANORDNUNG ZUR BEHANDLUNG VON ABGAS IN EINEM TURBOGELADENEN VERBRENNUNGSMOTOR UND VERFAHREN ZUM BETRIEB EINER AUFGELADENEN BRENNKRAFTMASCHINE
AGENCEMENT PERMETTANT DE TRAITER LES GAZ D'ÉCHAPPEMENT DANS UN MOTEUR À COMBUSTION INTERNE DU TYPE TURBOCOMPRESSÉ ET PROCÉDÉ DE FONCTIONNEMENT D'UN MOTEUR À COMBUSTION INTERNE DU TYPE TURBOCOMPRESSÉ

(30) Priority: 18.11.2013 FI 20136142
(43) Date of publication of application: 28.09.2016
(73) Proprietor: Wärtsilä Finland Oy, 65380 Vaasa (FI)
(72) Inventor: KINNARI, Pekka, FI-65100 Vaasa (FI); WIDJESKOG, Klaus, FI-65100 Vaasa (FI)
(74) Representative: Genip Oy
(86) International application number: PCT/FI2014/050850
(87) International publication number: WO 2015/071540

(56) References cited:
- WO-A1-2004/097195
- WO-A1-2010/052055
- WO-A1-2013/153257

## Description

### Technical field

Invention relates to an arrangement for treating exhaust gas in a turbocharged internal combustion engine, the exhaust gas system of which comprises at least a first turbine section and a first exhaust gas treatment device and a second exhaust gas treatment device connected in series with each other so that the exhaust gas is arranged to flow through each one of said elements, in which arrangement each of the first turbine section, the first exhaust gas treatment device and the second exhaust gas treatment device has exhaust gas connections to facilitate gas flow through them.

Invention relates also to method of operating a turbocharged internal combustion engine.

### Background art

Exhaust gas emission requirements of internal combustion piston engines become more and more stringent. In order to cope with such requirements there are various techniques available by means of which the gaseous emissions may be controlled when the engine is running. On the other hand, it is not desirable that the overall performance of the engine will suffer resulted from actions aiming to reduce the emissions.

Especially catalysts are commonly used to speed up reactions of certain substances contained by the exhaust gases of internal combustion piston engines. Such substances are for example nitrogen oxides, hydrocarbons, carbon oxides etc.

WO 2004/097195 A1 discloses an internal combustion engine in which two stage turbocharger systems have been arranged. After each turbine section there is arranged an exhaust gas catalyst. The exhaust gas system is disclosed which comprises at least a first turbine section and a first exhaust gas treatment device and a second exhaust gas treatment device, connected in series with each other so that the exhaust gas is arranged to flow through each one of said elements, in which arrangement each of the first turbine section, the first exhaust gas treatment device and the second exhaust gas treatment device has exhaust gas connections to facilitate gas flow through them.

When utilizing a catalytic emission reduction system in connection with internal combustion piston engines there are several issues to consider. Firstly, the location of the system in the exhaust gas stream more or less defines the available temperature range in which the catalyst is to operate. Typically such a catalyst should be located next to turbine section(s) of the engine i.e. quite near to the engine. Secondly, a risk of fouling and clogging is always an issue to consider, particularly in connection with engines operating with e.g. heavy fuel oil, although soot formation may take place with gas operated engines, too.

In the long run such exhaust gas treatment devices need to be maintained at desired operational condition so that they operate according to predefined specifications.

### Disclosure of the Invention

It is an object of the invention to provide an arrangement for treating exhaust gas in a turbocharged internal combustion engine, by means of which the exhaust gas treatment devices are maintained at desired operational condition.

Object of the invention is substantially met by an arrangement for treating exhaust gas in a turbocharged internal combustion engine, the exhaust gas system of which comprises at least a first turbine section and a first exhaust gas treatment device and a second exhaust gas treatment device connected in series with each other so that the exhaust gas is arranged to flow through each one of said elements, in which arrangement each of the first turbine section, the first exhaust gas treatment device and the second exhaust gas treatment device has exhaust gas connections to facilitate gas flow through them. It is characteristic to the invention that an exhaust gas manifold of the engine is selectively connectable between the inlets of the first and the second exhaust gas treatment device, and that an outlet of the first turbine section is selectively connectable between the inlets of the first and the second exhaust gas treatment device, inversely to the connection state of the exhaust gas manifold, and that the outlet of both the first and the second exhaust gas treatment device is selectively connectable to the inlet of the first turbine section and a downstream section of the exhaust gas system.

The arrangement makes it is possible to subject the gas treatment devices to different or alternating circumstances which facilitates maintaining the operational condition of the exhaust gas treatment devices.

According to an embodiment of the invention one of the two exhaust gas treatment devices is at its inlet arranged connectable to the exhaust manifold and at its outlet is arranged connectable to the inlet of the first turbine section such that other one of the two exhaust gas treatment devices is at its inlet connected to the outlet first turbine section and at its outlet to the inlet of the second turbine section.

According to an embodiment of the invention the first and/or the second exhaust gas treatment device comprise at its inlet a gas flow control device providing a selective connection between the inlet and one of two gas channels being in connection with the gas flow control device.

According to an embodiment of the invention that the first and/or the second exhaust gas treatment device comprise at its outlet a gas flow control device providing a selective connection between the outlet and one of two gas channels being in connection with the gas flow control device.

According to an embodiment of the invention the first and/or the second exhaust gas treatment device comprise at its inlet a gas flow control device providing a selective connection between the inlet and one of two gas channels being in connection with the gas flow control device and t the first and/or the second exhaust gas treatment device comprise at its outlet a gas flow control device providing a selective connection between the outlet and one of two gas channels being in connection with the gas flow control device.

According to an embodiment of the invention the inlet of the first turbine section and/or the inlet of the second turbine section comprise a gas flow control device providing a selective connection between the inlet and one of two gas channels being in connection with the gas flow control device.

According to an embodiment of the invention that the exhaust gas manifold and/or the outlet of the first turbine section comprise a gas flow control device providing a selective connection between the inlet and /or the manifold and one of two gas channels being in connection with the gas flow control device.

According to an embodiment of the invention the inlet of the first turbine section and/or the inlet of the second turbine section comprise a gas flow control device providing a selective connection between the inlet and one of two gas channels being in connection with the gas flow control device and the exhaust gas manifold and/or the outlet of the first turbine section comprise a gas flow control device providing a selective connection between the inlet and /or the manifold and one of two gas channels being in connection with the gas flow control device.

According to an embodiment of the invention the exhaust gas system of the engine further comprises a second turbine section arranged to the downstream section of the exhaust gas system and, in which arrangement each of the first turbine section, the second turbine section, the first exhaust gas treatment device and the second exhaust gas treatment device has exhaust gas connections to facilitate gas flow through them and that the outlets of both the first and the second exhaust gas treatment device is selectively connectable to the inlet of the first turbine section and the inlet of the second turbine section.

Object of the invention is also met by method of operating a turbocharged internal combustion engine, the exhaust gas system of which comprises a first turbine section and a second turbine section and a first exhaust gas treatment device and a second exhaust gas treatment device, in which method in the first mode thereof exhaust gas from the engine is guided to flow successively into first exhaust gas treatment device and there through to the first turbine section and further from the first turbine section to the second exhaust gas treatment device and there through to the second turbine section, and in the second mode of the method exhaust gas from the engine is guided to flow into second exhaust gas treatment device and there through to the first turbine section and further from the first turbine section to the first exhaust gas treatment device and there through to the second turbine section.

By practicing the method it is possible to subject the gas treatment devices to different or alternating circumstances which facilitate maintaining the operational condition of the exhaust gas treatment devices.

### Brief Description of Drawings

In the following, the invention will be described with reference to the accompanying exemplary, schematic drawings, in which
- Figure 1 (a) and (b) illustrates an internal combustion piston engine with an arrangement for treating exhaust gas according to an embodiment of the invention,
- Figure 2 (a) and (b) illustrates an internal combustion piston engine with an arrangement for treating exhaust gas according to another embodiment of the invention, and
- Figure 3 illustrates an internal combustion piston engine with an arrangement for treating exhaust gas according to still another embodiment of the invention.

### Detailed Description of Drawings

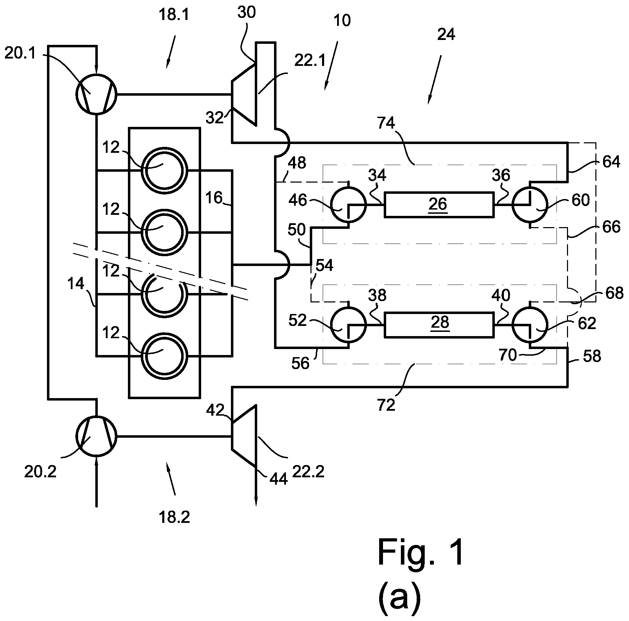

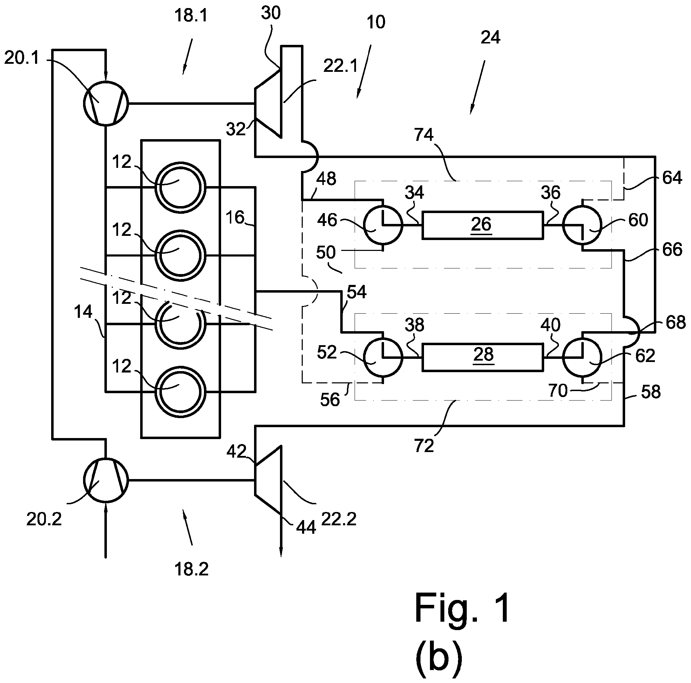

Figure 1 depicts schematically an internal combustion piston engine 10 with an arrangement for treating exhaust gases 24. The arrangement for treating exhaust gases 24 is shown in different operating modes in the Figures 1 (a) and (b). The dotted lines represent channels in passive mode and the solid lines represent active ones. The engine 10 comprises cylinders 12 in which the combustion of fuel is taken place when the engine is running in a manner known as such. Each cylinder 12 is in flow connection with combustion air inlet manifold 14 and an exhaust manifold 16 via respecting valves.

The engine 10 is provided with a first turbocharger unit 18.1 having a first compressor section 20.1 and a first turbine section 22.1. The engine is also provided with a second turbocharger unit 18.2 having a second compressor section 20.2 and a second turbine section 22.2.

In the embodiment of figure 1 the compressor sections 20.1, 20.2 are connected in series to supply pressurized combustion air to the engine. Also the turbine sections are connected in series with each other so that the exhaust gas is arranged to flow through each one of the turbine sections. The piston engine is provided with an arrangement for treating exhaust gases 24 produced by the engine 10 when the engine is running. The arrangement for treating exhaust gas 24 comprises a first gas treatment device 26 and a second gas treatment device 28. The first and the second gas treatment devices are shown in schematic manner and it should be understood that both of them may include auxiliary equipment such as reactant injection systems, cooling and/or heating system, which are known as such to a skilled person in the art. The first gas treatment device 26 may be for example an oxidation catalyst for oxidation of any oxidisable material present in the exhaust gas and the second gas treatment device 28 may be for example a NOx reducing catalyst, such as NOx trap, or a SCR (selective catalyst reduction system). The first turbine section 22.1 has a gas inlet 32 and a gas outlet 30. The first gas treatment device 26 and the second gas treatment device 28 are provided with gas inlets 34,38 and gas outlets 36,40, respectively. Also the second turbine section is provided with a gas inlet 42 and a gas outlet 44.

As can be seen in the figure 1 the exhaust gas manifold 16 of the engine is selectively connectable between the inlet 34 of the first exhaust gas treatment device 26 and the inlet 38 of the second exhaust gas treatment device 28 by means of a flow control device 46, 52. The flow control device is arranged such that it provides a selective connection between the inlet 34,38 and one of two gas channels 48, 50 and 54,56 being in connection with the gas flow control device 46,52. Additionally the outlet 30 of the first turbine section 22.1 is selectively connectable between the inlets 34,38 of the first and the second exhaust gas treatment device, inversely to the connection state of the exhaust gas manifold. This way the exhaust gas manifold 16 and the outlet 30 of the first turbine section 22.1 may be alternatively connected to the inlet of only one exhaust gas treatment device at a time. The gas channels 48 and 56 are in connection with the outlet 30 of the first turbine section 22.1. The gas channels 50 and 54 are in connection with the exhaust gas manifold 16.

Further, the outlet 36, 40 of both the first and the second exhaust gas treatment device 26, 28 is selectively connectable to the inlet 32 of the first turbine section 22.1 and a downstream section of the exhaust gas system 58 of the engine. As can also be seen in the figure 1, the connection between the outlets 36, 40 of the first and the second exhaust gas treatment devices 26,28 with the downstream section of the exhaust gas system 58 is arranged by means of a dedicated flow control device 60,62 in each of the exhaust gas treatment device 26,28. The flow control device 60,62 is arranged such that it provides a selective connection between the outlet 36,40 of the exhaust gas treatment device 26,28 and one of two gas channels 64,66 and 68,70 being in connection with the gas flow control device. The gas channels 64 and 68 are connected to the flow control device 60 at the first exhaust gas treatment device 26 and the flow control device 62 at the second exhaust gas treatment device 28, and also to the inlet 32 of the first turbine section 22.1. The gas channels 66 and 70 are in connection with the downstream section of the exhaust gas system 58 and also with the respective flow control devices 60,62. In this embodiment the downstream section 58 comprises the second turbine section 22.2 to the inlet 42 of which the downstream section 58 is connected. Thus the outlets 36, 40 of both the first and the second exhaust gas treatment device are selectively connectable to the inlet 32 of the first turbine section 22.1 and the inlet 42 of the second turbine section 22.2.

This way the gas may be arranged to flow in the first mode (Figure 1 (a)): the exhaust gas manifold 16 - the first exhaust gas treatment device 26 - the first turbine section 22.1 - the second exhaust gas treatment device 28 -the second turbine section 22.2, or alternatively in the second mode (Figure 1 (b)): the exhaust gas manifold 16 - the second exhaust gas treatment device 28 - the first turbine section 22.1 - the first exhaust gas treatment device 26 - the second exhaust gas treatment device 28. Changing the modes changes the operation circumstances of the treatment device.

As an example the exhaust gas upstream the first turbine section 22.1 may be at a temperature of 500-700 °C and the pressure may be for example 6 bar. This way it is possible to facilitate e.g. regeneration the treatment devices by means of changing the operating circumstances. This also provides a possibility to cause a thermal shock to prevent clogging from soot. It is also possible to change the mode based on the engines load. Further it is possible to effect on the temperature control of the treatment devices e.g. by speeding up the heating of one of two devices or cooling possibly overheated device.

It is also depicted in the embodiment of Figure 1 that the exhaust gas treatment device 26,28 is provided with gas flow control devices 46,60 and 52,62 connected directly to the inlet 34,38 and outlet 36,40 thereof forming an exhaust gas treatment unit 72,74. The exhaust gas treatment unit 72,74 according to an embodiment of the invention comprises an exhaust gas treatment device 26,28 and gas flow control devices 46,60,52,62 arranged at the inlet and at the outlet of the exhaust gas treatment device. Further the gas flow control device is arranged to provide a selective connection between the inlet/ the outlet and one of two gas channels being in connection with the gas flow control device.

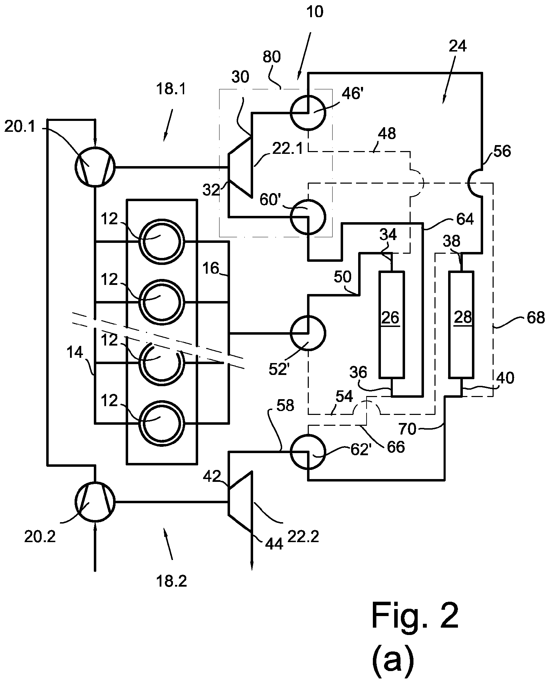

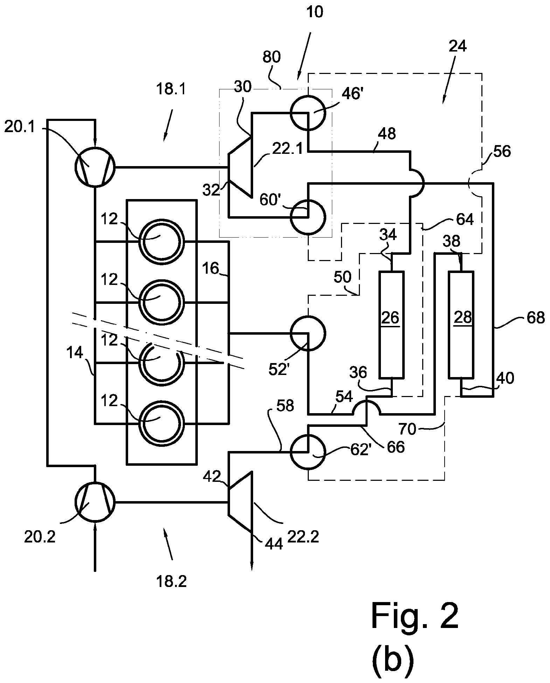

Figure 2 depicts schematically an internal combustion piston engine 10 with an arrangement for treating exhaust gases 24 according to another embodiment of the invention using the same reference number for corresponding features in figure 1. The arrangement for treating exhaust gases 24 is shown in different operating modes in the Figures 2 (a) and (b). Like in figure 1, the dotted lines represent channels in passive mode and the solid lines represent active ones. The engine 10 comprises cylinders 12 in which the combustion of fuel is taken place when the engine is running in a manner known as such. Each cylinder 12 is in flow connection with combustion air inlet manifold 14 and an exhaust manifold 16 via respecting gas exchange valves.

The engine 10 is provided with a first turbocharger unit 18.1 having a first compressor section 20.1 and a first turbine section 22.1. The engine is also provided with a second turbocharger unit 18.2 having a second compressor section 20.2 and a second turbine section 22.2. In other words the engine is provided with a so called two stage turbocharger. This way the compressor sections and the turbine sections form also the first and the second compressor stage and the first and the second turbine section, respectively.

In the embodiment of figure 2 the compressor sections 20.1, 20.2 are connected in series to supply pressurized combustion air to the engine. Also the turbine sections are connected in series with each other so that the exhaust gas is arranged to flow through each one of the turbine sections. The piston engine is provided with an arrangement for treating exhaust gases 24 according to another embodiment of the invention. The arrangement for treating exhaust gas 24 comprises a first gas treatment device 26 and a second gas treatment device 28. The first gas treatment device 26 may be also in this embodiment for example an oxidation catalyst for oxidation of any oxidisable material present in the exhaust gas. The second gas treatment device 28 may be for example a NOx reducing catalyst, such as a selective catalyst reduction system. The first turbine section 22.1 has a gas inlet 32 and a gas outlet 30. The first gas treatment device 26 and the second gas treatment device 28 are provided with respective gas inlets 34,38 and gas outlets 36,40 via which they communicate with the other parts of the arrangement. Also the second turbine section is provided with a gas inlet 42 and a gas outlet 44.

As can be seen in the figure 2 the exhaust gas manifold 16 of the engine is selectively connectable between the inlet 34 of the first exhaust gas treatment device 26 and the inlet 38 of the second exhaust gas treatment device 28 via a respective channel 50, 54. The connection is controlled by means of a flow control device 52' arranged in connection with the exhaust gas manifold 16. The flow control device is arranged such that it provides a selective connection between the exhaust gas manifold 16 and one of two inlets 34,38 via gas channels 50 and 54. So, the gas channels 50 and 54 are in connection with the exhaust gas manifold 16 via the flow control device 52'.

Additionally the outlet 30 of the first turbine section 22.1 is selectively connectable between the inlets 34,38 of the first and the second exhaust gas treatment device, but inversely to the connection of the exhaust gas manifold 16. The connection is controlled by means of a flow control device 46' arranged in connection with outlet 30 of the turbine section 22.1. The gas channels 48 and 56 are in connection via the flow control device 46' with the outlet 30 of the first turbine section 22.1. The flow control device 46' is arranged such that it provides a selective connection between the outlet 30 and one of two inlets 34,38 via the gas channels 48, 56. So, the inlet 34,38 of both the first and the second exhaust gas treatment device 26, 28 is selectively connectable to the outlet 30 of the first turbine section 22.1 and the exhaust gas manifold 16 by means of synchronized control of the flow control devices 46' and 52'.

This way the exhaust gas manifold 16 and the outlet 30 of the first turbine section 22.1 may be connected to the inlet of one exhaust gas treatment device one at a time.

There is a flow control device 60' arranged in connection with inlet 32 of the first turbine section 22.1. The channels 64 and 68 connects the flow control device with the outlets 36,40 of the exhaust gas treatment devices 26,28. So, by means of the flow control device 60' one of the outlets of the gas treatment devices may be connected to the inlet 32 of the first turbine section 22.1.

As can also be seen in the figure 2, the connection between the outlets 36, 40 of the first and the second exhaust gas treatment devices 26,28 with the downstream section of the exhaust gas system 58 is arranged by means of a dedicated flow control device 62'. The flow control device 62' is arranged such that it provides a selective connection between either of the outlets 36,40 of the exhaust gas treatment device 26,28 via the gas flow control device 62' to the downstream section of the exhaust gas system 58. The two other gas channels 64 and 68 leading from the outlets 36,40 are connected to the flow control device 60' at the inlet 32 of the first turbine section 22.1 which is arranged to connect one outlet 36,40 of gas treatment devices 26,28 at a time with the inlet 32 of the first turbine section 22.1.

Further, the outlet 36, 40 of both the first and the second exhaust gas treatment device 26, 28 is selectively connectable to the inlet 32 of the first turbine section 22.1 and a downstream section of the exhaust gas system 58 of the engine by means of synchronized control of the flow control devices 62' and 60'.

Also In this embodiment the downstream section 58 comprises the second turbine section 22.2 to the inlet 42 of which the downstream section 58 is connected. Thus the outlets 36, 40 of both the first and the second exhaust gas treatment device are selectively connectable to the inlet 32 of the first turbine section 22.1 and the inlet 42 of the second turbine section 22.2.

By the synchronized operation of the flow control devices the gas may be arranged to flow in the first mode (Figure 2 (a)): the exhaust gas manifold 16 - the first exhaust gas treatment device 26 - the first turbine section 22.1 - the second exhaust gas treatment device 28 - the second turbine section 22.2, or alternatively in the second mode (Figure 2 (b)): the exhaust gas manifold 16 - the second exhaust gas treatment device 28 - the first turbine section 22.1 - the first exhaust gas treatment device 26 - the second turbine section 22.2. Changing the modes changes the operation circumstances of the treatment device.

As an example the exhaust gas upstream the first turbine section 22.1 may be at a temperature of 500-700 °C and the pressure may be for example 6 bar. This way it is possible to facilitate e.g. regeneration the treatment devices by means of changing the operating circumstances. This also provides a possibility to cause a thermal shock to prevent clogging from soot. It is also possible to change the mode based on the engines load. Further it is possible to effect on the temperature control of the treatment devices e.g. by speeding up the heating of one of two devices or cooling possibly overheated device.

It is also depicted in the embodiment of Figure 2 that the first turbine section 22.1 of the turbocharger 18 is provided with gas flow control devices 46',60' connected directly to the inlet 32 and outlet 30 thereof constituting a turbine unit 80 bordered by the dash-dot line in the figure. The turbine unit 80 according to an embodiment of the invention comprises a turbine section 22.1 and gas flow control devices 46', 60' arranged at the inlet 32 and at the outlet 30 of the first turbine section 22.1. The gas flow control devices 46', 60' is arranged to provide a selective connection between the inlet 32 and the outlet 30 of the first turbine section 22.1 and one of two gas channels being in connection with the gas flow control device of each of the inlet 32 and the outlet 30. The flow control devices 46', 60' may be integrated with the first turbine section 22.1 so that all the four channels may be included in one attachment system, like a flange.

The turbine unit according to the embodiment of the invention forms together with compressor section 20.1 turbocharger unit having gas flow control devices 46', 60' arranged at the inlet and at the outlet of the first turbine section 22.1.

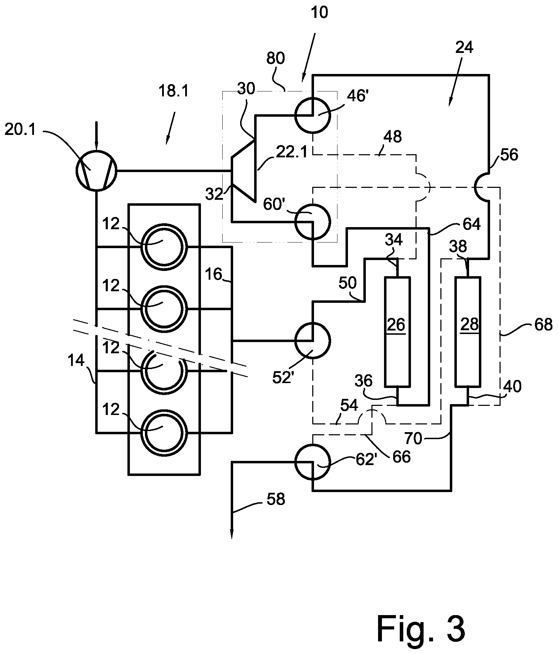

Figure 3 shows a further embodiment of the invention in which the engine is provided with only 1-stage of turbochargers 18. Figure 3 depicts schematically an internal combustion piston engine 10 with an arrangement for treating exhaust gases 24 according to another embodiment of the invention using the same reference number for corresponding features in figure 2. The only difference in the embodiment of figure 3 compared to that in figure 2 is the omission of the second stage of turbochargers i.e. the engine is provided with only one stage of compressor and turbine.

The connections, elements and operation of the arrangement in a view of the invention is similar to that shown in figure 2. But, instead of the second turbine section 22.2 in figure 3, the connection between the outlets 36, 40 of the first and the second exhaust gas treatment devices 26,28 with the downstream section of the exhaust gas system 58 does not include a turbine section but the treated exhaust gas is led to different further processing. Still, the arrangement is provided with a dedicated flow control device 62 which is arranged such that it provides a selective connection between either of the outlets 36,40 of the exhaust gas treatment device 26,28 via the gas flow control device 62' to the downstream section of the exhaust gas system 58. The two other gas channels 64 and 68 leading from the outlets 36,40 are connected to the flow control device 60' at the inlet 32 of the first turbine section 22.1 as is the case in the embodiment shown in figure 2 also.

By the synchronized operation of the flow control devices the gas may be arranged to flow in the first mode: the exhaust gas manifold 16 - the first exhaust gas treatment device 26 - the first turbine section 22.1 - the second exhaust gas treatment device 28 - the downstream section of the exhaust gas system 58, or alternatively in the second mode: the exhaust gas manifold 16 - the second exhaust gas treatment device 28 - the first turbine section 22.1 - the first exhaust gas treatment device 26 - the downstream section of the exhaust gas system 58. Changing the modes changes the operation circumstances of the treatment device.

As an example the exhaust gas upstream the first turbine section 22.1 may be at a temperature of 500-700 °C and the pressure may be for example 6 bar. This way it is possible to facilitate e.g. regeneration the treatment devices by means of changing the operating circumstances. This also provides a possibility to cause a thermal shock to prevent clogging from soot. It is also possible to change the mode based on the engines load. Further it is possible to effect on the temperature control of the treatment devices e.g. by speeding up the heating of one of two devices or cooling possibly overheated device.

It is also depicted in the embodiment of Figure 2 that the first turbine section 22.1 of the turbocharger 18 is provided with gas flow control devices 46',60' connected directly to the inlet 32 and outlet 30 thereof constituting a turbine unit 80 bordered by the dash-dot line in the figure. The turbine unit 80 according to an embodiment of the invention comprises a turbine section 22.1 and gas flow control devices 46', 60' arranged at the inlet and at the outlet 30 of the first turbine section 22.1. Further, the gas flow control device is arranged to provide a selective connection between the inlet/ the outlet and one of two gas channels being in connection with the gas flow control device. The turbine unit according to the embodiment of the invention forms together with compressor section 20.1 turbocharger unit having gas flow control devices 46', 60' arranged at the inlet 32 and at the outlet 30 of the first turbine section 22.1.

It should be noted that in all of the embodiments respective inlet and outlet in the gas treatment devices may be switched so that that actual gas flow direction is different or selected as desired when, by the synchronized operation of the flow control devices, the gas is arranged to flow in the first mode (Figure 1 and 2(a)) or alternatively in the second mode (Figure 1 and 2(b)).

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. Invention may be applied to engines operating with different cycles. The details mentioned in connection with any embodiment above may be used in connection with another embodiment when such a combination is technically feasible.

## Claims

1. Arrangement for treating exhaust gas (24) in a turbocharged internal combustion engine (10), the exhaust gas system of which comprises at least a first turbine section (22.1) and a first exhaust gas treatment device (26) and a second exhaust gas treatment device (28), connected in series with each other so that the exhaust gas is arranged to flow through each one of said elements, in which arrangement each of the first turbine section (22.1), the first exhaust gas treatment device (26) and the second exhaust gas treatment device (28) has exhaust gas connections to facilitate gas flow through them, **characterized in that**
- an exhaust gas manifold (16) of the engine is selectively connectable between inlets (34,38) of the first and the second exhaust gas treatment device (26,28), and that
- an outlet (30) of the first turbine section (22.1) is selectively connectable between the inlets (34,38) of the first and the second exhaust gas treatment device (26,28), inversely to the connection state of the exhaust gas manifold (16), and that
- the outlet (36,40) of both the first and the second exhaust gas treatment device (26,28) is selectively connectable to the inlet (32) of the first turbine section (22.1) and a downstream section (58) of the exhaust gas system.

2. Arrangement according to claim 1, **characterized in that** one of the two exhaust gas treatment devices (26,28) is at its inlet arranged connectable to the exhaust manifold (16) and at its outlet (36,40) connectable to the inlet (32) of the first turbine section (22.1) such that other one of the two exhaust gas treatment devices (26,28) is at its inlet (34,38) connected to the outlet (30) first turbine section (22.1) and at its outlet (36,40) to the inlet (42) of the second turbine section (22.2).

3. Arrangement according to claim 1 or 2, **characterized in that** the first and/or the second exhaust gas treatment device comprise at its inlet a gas flow control device (46,52) providing a selective connection between the inlet and one of two gas channels (48,50;54,56) being in connection with the gas flow control device.

4. Arrangement according to claim 1 or 2, **characterized in that** the first and/or the second exhaust gas treatment device (26,28) comprise at its outlet (36,40) a gas flow control device (60,62) providing a selective connection between the outlet and one of two gas channels (64,66;68,58) being in connection with the gas flow control device.

5. Arrangement according to claims 3 and 4.

6. Arrangement according to claim 1 or 2, **characterized in that** the inlet (32) of the first turbine section (22.1) and/or the inlet (42) of the second turbine section (22.2) comprise a gas flow control device (60',62') providing a selective connection between the inlet (32) and one of two gas channels (64,68;66,70) being in connection with the gas flow control device.

7. Arrangement according to claim 1 or 2, **characterized in that** the exhaust gas manifold (16) and/or the outlet (30) of the first turbine section (22.1) comprise a gas flow control device (52',46') providing a selective connection between the inlet (30) and /or the manifold (16) and one of two gas channels (50,54;48,56) being in connection with the gas flow control device.

8. Arrangement according to claims 6 and 7.

9. Arrangement according to anyone of the preceding claims, **characterized in** the exhaust gas system of the engine further comprises a second turbine section (22.2) arranged to the downstream section (58) of the exhaust gas system and, in which arrangement each of the first turbine section (22.1), the second turbine section (22.2), the first exhaust gas treatment device (26) and the second exhaust gas treatment device (28) has exhaust gas connections (46,52,60,62;46',52',60',62') to facilitate gas flow through them and that the outlets (36,40) of both the first and the second exhaust gas treatment device (26,28) is selectively connectable to the inlet (32) of the first turbine section (22.1) and the inlet (42) of the second turbine section (22.2).

10. Method of operating a turbocharged internal combustion engine (10), the exhaust gas system of which comprises a first turbine section (22.1) and a second turbine section (22.2) and a first exhaust gas treatment device (26) and a second exhaust gas treatment device (28), in which method in the first mode thereof exhaust gas from the engine is guided to flow successively into first exhaust gas treatment device (26) and there through to the first turbine section (22.1) and further from the first turbine section to the second exhaust gas treatment device (28) and there through to the second turbine section (22.2), **characterized in that** in the second mode of the method exhaust gas from the engine is guided to flow into second exhaust gas treatment device (28) and there through to the first turbine section (22.1) and further from the first turbine section to the first exhaust gas treatment device (26) and there through to the second turbine section (22.2).

## Patentansprüche

1. Anordnung zur Behandlung von Abgas (24) in einem turbogeladenen Verbrennungsmotor (10), wobei das Abgassystem davon mindestens einen ersten Turbinenabschnitt (22.1) und eine erste Abgasbehandlungsvorrichtung (26) und eine zweite Abgasbehandlungsvorrichtung (28) umfasst, die miteinander derart in Reihe geschaltet sind, dass das Abgas derart eingerichtet ist, dass es durch jedes der Elemente strömt, wobei bei dieser Anordnung der erste Turbinenabschnitt (22.1), die erste Abgasbehandlungsvorrichtung (26) und die zweite Abgasbehandlungsvorrichtung (28) jeweils Abgasverbindungen aufweisen, um eine Gasströmung durch diese zu ermöglichen, **dadurch gekennzeichnet, dass**
- einen Abgaskrümmer (16) des Motors gezielt zwischen Einlässen (34, 38) der ersten und zweiten Abgasbehandlungsvorrichtung (26, 28) angeschlossen werden kann, und dass
- ein Auslass (30) des ersten Turbinenabschnitts (22.1) gezielt zwischen den Einlässen (34, 38) der ersten und der zweiten Abgasbehandlungsvorrichtung (26, 28) umgekehrt zu dem Anschlusszustand des Abgaskrümmers (16) angeschlossen werden kann, und dass
- der Auslass (36, 40) sowohl der ersten als auch der zweiten Abgasbehandlungsvorrichtung (26, 28) gezielt an den Einlass (32) des ersten Turbinenabschnitts (22.1) und einen stromabwärtigen Abschnitt (58) des Abgassystems angeschlossen werden kann.

2. Anordnung nach Anspruch 1, **dadurch gekennzeichnet, dass** eine der beiden Abgasbehandlungsvorrichtungen (26, 28) an ihrem Einlass an den Abgaskrümmer (16) anschließbar und an ihrem Auslass (36, 40) an den Einlass (32) des ersten Turbinenabschnitts (22.1) anschließbar eingerichtet ist, so dass die andere der beiden Abgasbehandlungsvorrichtungen (26, 28) an ihrem Einlass (34, 38) an den Auslass (30) des ersten Turbinenabschnitts (22.1) und an ihrem Auslass (36, 40) an den Einlass (42) des zweiten Turbinenabschnitts (22.2) angeschlossen ist.

3. Anordnung nach Anspruch 1 oder 2, **dadurch gekennzeichnet, dass** die erste und/oder die zweite Abgasbehandlungsvorrichtung an ihrem Einlass eine Gasströmungssteuerungsvorrichtung (46, 52) umfasst, die eine gezielte Verbindung zwischen dem Einlass und einem von zwei Gaskanälen (48, 50; 54, 56), der mit der Gasströmungssteuerungsvorrichtung verbunden ist, bereitstellt.

4. Anordnung nach Anspruch 1 oder 2, **dadurch gekennzeichnet, dass** die erste und/oder die zweite Abgasbehandlungsvorrichtung (26, 28) an ihrem Auslass (36, 40) eine Gasströmungssteuerungsvorrichtung (60, 62) umfassen, die eine gezielte Verbindung zwischen dem Auslass und einem von zwei Gaskanälen (64, 66; 68, 58), der mit der Gasströmungssteuerungsvorrichtung verbunden ist, bereitstellt.

5. Anordnung nach den Ansprüchen 3 und 4.

6. Anordnung nach Anspruch 1 oder 2, **dadurch gekennzeichnet, dass** der Einlass (32) des ersten Turbinenabschnitts (22.1) und/oder der Einlass (42) des zweiten Turbinenabschnitts (22.2) eine Gasströmungssteuerungsvorrichtung (60', 62') umfasst, die eine gezielte Verbindung zwischen dem Einlass (32) und einem von zwei Gaskanälen (64, 68; 66, 70), der mit der Gasströmungssteuerungsvorrichtung verbunden ist, bereitstellt.

7. Anordnung nach Anspruch 1 oder 2, **dadurch gekennzeichnet, dass** der Abgaskrümmer (16) und/oder der Auslass (30) des ersten Turbinenabschnitts (22.1) eine Gasströmungssteuerungsvorrichtung (52', 46') umfassen, die eine gezielte Verbindung zwischen dem Einlass (30) und/oder dem Krümmer (16) und einem von zwei Gaskanälen (50, 54; 48, 56), der mit der Gasströmungssteuerungsvorrichtung verbunden ist, bereitstellt.

8. Anordnung nach den Ansprüchen 6 und 7.

9. Anordnung nach einem der vorherigen Ansprüche, **dadurch gekennzeichnet, dass** das Abgassystem des Motors ferner einen zweiten Turbinenabschnitt (22.2) umfasst, der zu dem stromabwärtigen Abschnitt (58) des Abgassystems angeordnet ist, und wobei bei dieser Anordnung der erste Turbinenabschnitt (22.1), der zweite Turbinenabschnitt (22.2), die erste Abgasbehandlungsvorrichtung (26) und die zweite Abgasbehandlungsvorrichtung (28) jeweils Abgasverbindungen (46, 52, 60, 62; 46', 52', 60', 62') aufweisen, um eine Gasströmung durch diese zu ermöglichen, und dass die Auslässe (36, 40) sowohl der ersten als auch der zweiten Abgasbehandlungsvorrichtung (26, 28) gezielt an den Einlass (32) des ersten Turbinenabschnitts (22.1) und den Einlass (42) des zweiten Turbinenabschnitts (22.2) angeschlossen werden können.

10. Verfahren zum Betrieb eines turbogeladenen Verbrennungsmotors (10), wobei das Abgassystem davon einen ersten Turbinenabschnitt (22.1) und einen zweiten Turbinenabschnitt (22.2) und eine erste Abgasbehandlungsvorrichtung (26) und eine zweite Abgasbehandlungsvorrichtung (28) umfasst, wobei bei diesem Verfahren in dem ersten Modus davon Abgas von dem Motor derart geführt wird, dass es sukzessive in die erste Abgasbehandlungsvorrichtung (26) und durch diese zu dem ersten Turbinenabschnitt (22.1) und weiter von dem ersten Turbinenabschnitt zu der zweiten Abgasbehandlungsvorrichtung (28) und durch diese zu dem zweiten Turbinenabschnitt (22.2) strömt, **dadurch gekennzeichnet, dass** in dem zweiten Modus des Verfahrens Abgas von dem Motor derart geführt wird, dass es in die zweite Abgasbehandlungsvorrichtung (28) und durch diese zu dem ersten Turbinenabschnitt (22.1) und weiter von dem ersten Turbinenabschnitt zu der ersten Abgasbehandlungsvorrichtung (26) und durch diese zu dem zweiten Turbinenabschnitt (22.2) strömt.

## Revendications

1. Agencement permettant de traiter les gaz d'échappement (24) dans un moteur à combustion interne (10) du type turbocompressé, dont le système de gaz d'échappement comprend au moins une première section de turbine (22.1) et un premier dispositif de traitement de gaz d'échappement (26) et un second dispositif de traitement de gaz d'échappement (28), raccordés en série l'un avec l'autre de sorte que le gaz d'échappement soit agencé pour s'écouler à travers chacun desdits éléments, agencement dans lequel chacun de la première section de turbine (22.1), le premier dispositif de traitement de gaz d'échappement (26) et le second dispositif de traitement de gaz d'échappement (28) possède des raccords de gaz d'échappement pour faciliter l'écoulement du gaz à travers ceux-ci, **caractérisé en ce que**
- un collecteur de gaz d'échappement (16) du moteur peut être raccordé sélectivement entre des entrées (34,38) du premier et du second dispositif de traitement de gaz d'échappement (26,28) et **en ce que**
- une sortie (30) de la première section de turbine (22.1) peut être raccordé sélectionné entre les entrées (34,38) du premier et du second dispositif de traitement de gaz d'échappement (26,28) inversement à l'état de raccordement du collecteur de gaz d'échappement (18) et **en ce que**
- la sortie (36,40) d'à la fois le premier et le second dispositif de traitement de gaz d'échappement (26,28) peut être raccordée sélectivement à l'entrée (32) de la première section de turbine (22.1) et une section en aval (58) du système de gaz d'échappement.

2. Agencement selon la revendication 1, **caractérisé en ce que** un des deux dispositifs de traitement de gaz d'échappement (26,28)est au niveau de l'entrée agencée de manière à pouvoir être raccordée au collecteur d'échappement (16) et sa sortie (36,40) pouvant être raccordée à l'entrée (32) de la première section de turbine (22.1) de sorte qu'un autre des deux dispositifs de traitement de gaz d'échappement (26,258) est à son entrée (345,38) raccordée à la sortie (30) de la première section de turbine (22.1) et à sa sortie (36,40) à l'entrée (42) de la seconde section de turbine (22.2).

3. Agencement selon la revendication 1 ou 2, **caractérisé en ce que** le premier et/ou le second dispositif de traitement de gaz d'échappement comprend à son entré un dispositif de régulation de flux de gaz (46,52) fournissant un raccordement sélectif entre l'entrée et un des deux canaux de gaz (48,50 ;54,56) étant en raccordement avec le dispositif de régulation de flux de gaz.

4. Agencement selon la revendication 1 ou 2, **caractérisé en ce que** le premier et/ou le second dispositif de traitement de gaz d'échappement (26,28) comprend à sa sortie (36,40) un dispositif de régulation de flux de gaz (60,62) fournissant un raccordement sélectif entre la sortie et un des deux canaux de gaz (64, 66 ; 68,58) étant en raccordement avec le dispositif de régulation avec le flux de gaz.

5. Agencement selon les revendications 3 et 4.

6. Agencement selon la revendication 1 ou 2, **caractérisé en ce que** l'entrée (32) de la première section de turbine (22.1) et/ou l'entrée (42) de la seconde section de turbine (22.2) comprend un dispositif de régulation de flux de gaz (60',62') fournissant un raccordement sélectif entre l'entrée (32) et un des deux canaux de gaz (64,68 ;66,70) étant en raccordement avec le dispositif de régulation de flux de gaz.

7. Agencement selon la revendication 1 ou 2, **caractérisé en ce que** le collecteur de gaz d'échappement (16) et/ou la sortie (30) de la première section de turbine (22.1) comprend un dispositif de régulation de flux de gaz (52',46') fournissant un raccordement sélectif entre l'entrée (30) et/ou le collecteur (16) et un des deux canaux de gaz (50,54 ;48 ;56) étant en raccordement avec le dispositif de régulation de flux de gaz.

8. Agencement selon les revendications 6 et 7.

9. Agencement selon une quelconque des revendications précédentes, **caractérisé en ce que** le système de gaz d'échappement du moteur comprend en outre une seconde section de turbine (22.2) agencé avec la section en aval (58) du système de gaz d'échappement et, dans lequel agencement chacun de la première section de turbin (22.1), la seconde section de turbine (22.2), le premier dispositif de traitement de gaz d'échappement (26) et le second dispositif de traitement de gaz d'échappement (28) possèdent des raccords de gaz (46, 52, 60, 62 ; 46', 52', 60', 62') pour faciliter l'écoulement du gaz à travers ceux-ci et **en ce que** les sorties (36,40) d'à la fois le premier et le second dispositif de traitement de gaz d'échappement (26,28) peut être raccordé sélectivement à l'entrée (32) de la première section de turbine (22.1) et l'entrée (42) de la seconde section de turbine (22.2).

10. Procédé de fonctionnement d'un moteur à combustion interne du type turbocompressé (10), dont le système de gaz d'échappement comprend une première section de turbine (22.1) et une seconde section de turbine (22.2) et un premier dispositif de traitement de gaz d'échappement (26) et un second dispositif de traitement de gaz d'échappement (28), procédé dans lequel dans le premier mode de ce dernier du gaz d'échappement provenant du moteur est guidé afin de s'écouler successivement dans le premier dispositif de traitement de gaz d'échappement (26), et de là à travers la première section de turbine (22.1) et plus loin de la première section de turbine vers le second dispositif de traitement de gaz d'échappement (28) et à travers celui-ci vers la seconde section de turbine (22.2), **caractérisé en ce que** dans le second mode du procédé du gaz d'échappement provenant du moteur est guidé afin de s'écouler dans le second dispositif de traitement de gaz d'échappement (28) et à travers celui-ci vers la première section de turbine (22.1) et plus loin de la première section de turbine vers le premier dispositif de traitement de gaz d'échappement (26) et à travers celui-ci vers la seconde section de turbine (22.2).
